Europäisches Patentamt

European Patent Office

Office européen des brevets

(11) Publication number: **0 320 523 B1**

# EUROPEAN PATENT SPECIFICATION

(45) Date of publication of patent specification: **26.08.92**  (51) Int. Cl.5: **A23L 1/236**, A23G 3/30

(21) Application number: **87118586.4**

(22) Date of filing: **15.12.87**

(54) **Method of agglomerating high-potency sweeteners.**

(43) Date of publication of application:
**21.06.89 Bulletin 89/25**

(45) Publication of the grant of the patent:
**26.08.92 Bulletin 92/35**

(84) Designated Contracting States:
**AT BE CH DE ES FR GB IT LI LU NL SE**

(56) References cited:
**EP-A- 0 053 844**
**EP-A- 0 067 595**
**EP-A- 0 106 910**
**EP-A- 0 237 266**
**FR-A- 2 346 988**

(73) Proprietor: **WM. WRIGLEY JR. COMPANY**
**410 North Michigan Avenue**
**Chicago Illinois 60611(US)**

(72) Inventor: **Zibell, Steven E.**
**6049 West 129th Street**
**Palos Heights Illinois 60463(US)**

(74) Representative: **Prüfer, Lutz H., Dipl.-Phys.**
**Harthauser Strasse 25d**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to methods for agglomerating high-potency sweeteners, in particular for treating aspartame to change their physical properties. More particularly, the invention relates to methods for improving the handling properties of high-potency sweeteners.

In recent years, high-potency or high-intensity sweeteners have become widely accepted in various applications. Most notably, the artificial sweeteners such as saccharin and aspartame have enjoyed considerable popularity in food products designed to have reduced caloric values. In general, these compounds will have the characteristics of being sweeter than sucrose and have negligible caloric value.

While research has been undertaken to improve various aspects of these sweeteners, one area of considerable interest has been that of improving their physical properties. In particular, efforts have been undertaken to improve the flowability and the resistance to caking of these compounds. In addition, work has been done in the way of adjusting the bulk density of these compounds so that they may be used in a dry mix (e.g. a dry beverage mix) without having them settle to the bottom or float to the top of the mix. These properties are especially important to control in view of the fact that these sweeteners have such high sweetness value. In other words, because these sweeteners have such high potency, it is important to work with small amounts of the sweeteners and to insure that the sweeteners are well dispersed in the products in which they are used.

As an example, the high-potency dipeptide sweetener L-aspartic acid ester of L-phenylalanine, generally known as aspartame, has a natural form of small needle-like crystals. In this form, the aspartame powder does not flow very well. In addition, the compound is known to have erratic flow properties due to its electrostatic properties. Another problem caused by the needle shaped crystals of aspartame is the fact that in certain applications it is desirable to encapsulate the aspartame, such as by a fluid bed coating or spray drying technique. However, the needle-like crystals are generally more difficult to coat.

From EP-A-0 237 266 a method for agglomerating bits made by mixing aspartame and a bulking agent is known. The sweetener aspartame and the bulking agent are mixed, a solvent is added so that agglomeration occurs. Thereafter the agglomerated bits are dried and sifted through a screen. Such agglomerated bits are suitabe for use in home-cooked grain cereals and other foods. Such a use makes it necessary for the known method to keep the concentration of aspartame in the aspartame premix down to about 1 % to about 3 %. Therefore no high-potency sweetener can be obtained.

U.S Patent No. 4,597,970, to Sharma et al., teaches a process for producing an agglomerated sweetener wherein the sweetener is dispersed in a hydrophobic matrix consisting essentially of lecithin, a glyceride, and a fatty acid or wax having a melting point between 25 and 100°C. The method disclosed uses a spray congealing step to form the sweetener-containing matrix into droplets followed by a fluid bed second coating on the agglomerated particles.

U.S Patent No. 4,517,214, to Shoaf et al., describes a process wherein some of the afore-mentioned difficulties in working with aspartame are addressed by agglomerating the aspartame crystals through the use of a solution of aspartame with unsolvated aspartame. The solution is intended to recrystalise and thus aggregate clusters of the unsolvated aspartame. The preferred method of drying the aspartame is by spray drying, although extrusion of a mass of dough-like consistency which is then dried and ground is mentioned.

U.S. Patent No. 4,554,167 to Sorge et al. discloses a process whereby aspartame is agglomerated without the use of moisture by combining it with a food grade acid and then heating the blend to 60-93,3°C (140 to 200°F) while mixing.

U.S. Patent No. 4,139,639, to Bahoshy et al., teaches a process of "fixing" aspartame by co-drying (by spray or fluid bed drying) a solution or slurry containing aspartame and an encapsulating agent, such as gum arabic, to thereby surround and protect the aspartame during storage in chewing gum.

U.S. Patent No. 4,384,004, to Cea et al., teaches a method of encapsulating aspartame with various solutions of encapsulating agents using various encapsulation techniques such as spray drying in order to increase the shelf-stability of the aspartame.

Naturally, the processes which use spray drying or fluid bed coating techniques for encapsulating the ingredients involve a relatively large investment in equipment and require skilled operating personnel and sophisticated process controls.

The present invention is directed to improved methods for agglomerating high-potency sweeteners.

The method according to the present invention is characterized by the features of claim 1, claim 2, or claim 3. That is to say, a quantity of a powdered high-potency sweetener is mixed with an agglomerating agent, such as a modified cellulose, and a limited quantity of a solvent, such as water. The quantity of solvent is limited so as to produce a mixture which is only moist or damp. This damp mixture is characterized as being dust-free, non-flowing and crumbly. The damp mixture is then dried. The dried mixture is treated, e.g. by grinding and/or screening, to produce the desired particle size range in the agglomerated high-potency sweetener particles. These agglomerated particles comprise collections or clusters of sweetener particles which are bound together with the agglomerating agent.

In accordance with one preferred embodiment of the present invention, the high-potency sweetener to be treated is the artificial sweetener known as aspartame and the agglomerating agent is hydroxypropyl methylcellulose (HPMC). The aspartame is preferably dry blended with the HPMC in an amount of about 15 percent HPMC by weight of the agglomerated aspartame. The mixing is accomplished in a planetary or other type mixer which effects compressive forces between the components. Water is added to the dry blend in small increments while mixing until it is present in an amount of about 36 percent of the damp mixture. The damp mixture is spread out on trays and dried at about 76,7°C (170°F) for 12 to 14 hours. After drying, the mixture preferably has between 2 and 3 weight percent water. The dried mixture is then ground in a high speed grinder with a 0.05 inch screen.

The present invention offers advantages in that it provides a relatively simple and inexpensive method for treating high-potency sweeteners to improve their handling properties. In particular, the method of the present invention has been found to improve the flowability and resistance to caking of high-potency sweeteners such as aspartame. It has also been used to adjust the bulk density of the sweeteners so that they can be used in dry mixes with less chance of settling to the bottom or floating to the top. Moreover, the process of this invention can be carried out in a relatively short time and using relatively simple equipment. It was a surprising result that this relatively simple and inexpensive process could produce agglomerated sweeteners having these improved properties. Moreover, although the present invention may be carried out in a continuous process, it is also well suited for batch processes. This is particularly important in view of the small quantities of the sweeteners typically needed.

These and other advantages of the present invention will become apparent from the following description which, when taken in conjunction with the accompanying figures, discloses presently preferred methods of the present invention.

Figure 1 is a schematic representation of the preferred method of the present invention.

Figures 2a is a photomicrograph of untreated aspartame crystals.

Figures 2b is a photomicrograph of a product of the most preferred method of the present invention.

Figures 2c and 2d are photomicrographs of products of alternative embodiments of the present invention.

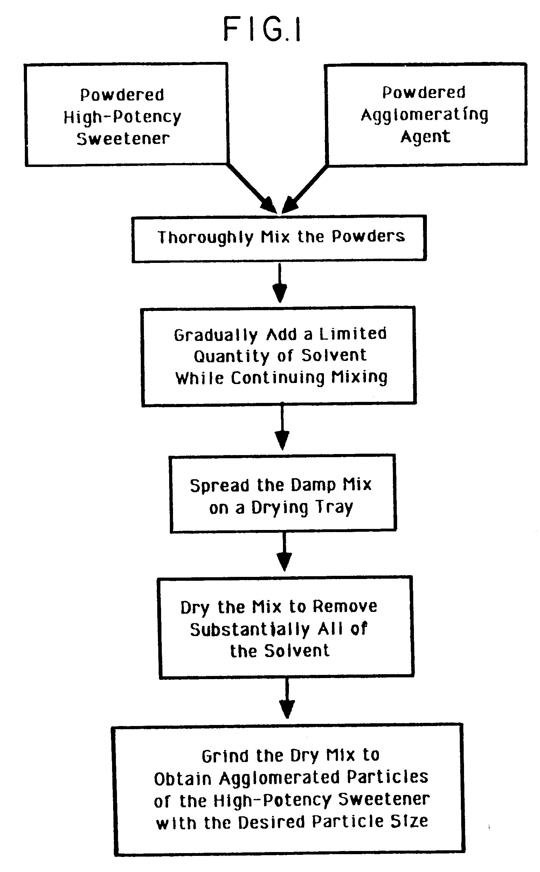

Referring to the drawings, Figure 1 is a block diagram illustrating the steps in the process of the preferred embodiment of the present invention. First, a quantity of powdered high-potency sweetener is mixed with a quantity of powdered agglomerating agent. The powdered high-potency sweetener can be selected from a wide variety of either artificial or natural sweeteners, such as aspartame, salts of acesulfame, alitame, saccharin and its salts, cyclamic acid and its salts, dihydrochalcones, thaumatin, or monellin, etc.

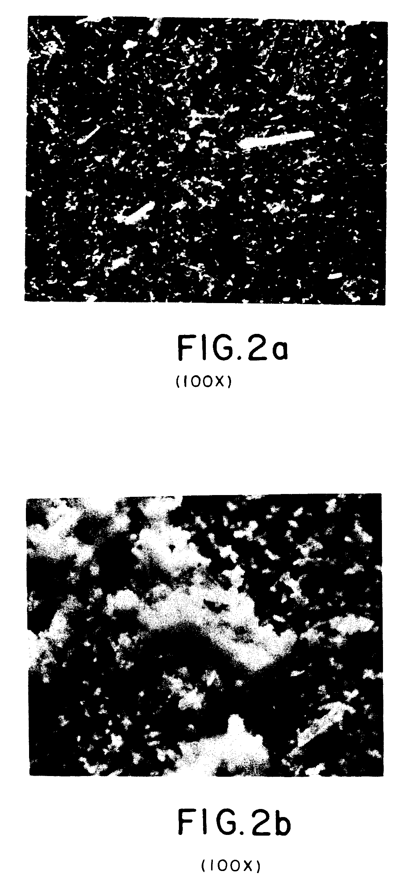

Most preferably the high-potency sweetener used in this invention is the dipeptide sweetener L-aspartic acid ester of L-phenylalanine, generally known as aspartame or APM. The aspartame used in the most preferred embodiment, is obtained from the G.D. Searle Company under the designation "Nutrasweet[R]." This is a powdered form with generally needle shaped crystals having a wide range of particle sizes. FIGURE 2a is a photomicrograph at 100 X showing the form of the aspartame crystals before treatment by the present process. As can be seen, the crystals are relatively small and needle-like. As mentioned above, this powdered form is relatively difficult to work with because of its poor flowability and low bulk density.

In alternatively preferred embodiments, the sweetener is the potassium salt of 6-methyl-1.2.3-oxathiazin-4(3H)-one-2.2-dioxide generally known as acesulfame K. Acesulfame K is a relatively dense sweetener. Accordingly, if it is to be used in a dry mix, it is preferred to agglomerate with an agent which will lower the bulk density of the resultant particles.

In other alternatively preferred embodiments, the sweetener is L-aspartyl-D-alanine 2,2,4,4 tetramethylthienyl-amide, generally known as alitame.

The present invention also contemplates the inclusion of more than one high-potency sweetener. That is, two or more sweeteners may be mixed together before or during the present process. For example, it may be desirable to blend one sweetener having certain flavor notes with another complimentary sweetener.

The powdered agglomerating agent may be selected from a wide variety of agglomerating agents. Examples of suitable agglomerating agents include modified cellulose compounds, such as hydroxypropyl methylcellulose (HPMC); gums, such as gum arabic; shellac; alcohol soluble proteins, such as zein; starches; maltodextrins; lactose; carbohydrate syrups; polymers such as polyolefins, polyesters, polyvinyl

3

acetate; etc. Plasticizers and conditioners for the agglomerating agent may also be used.

Modified cellulose compounds are presently preferred, with HPMC being used in the most preferred embodiment to encapsulate aspartame. The HPMC used in the most preferred embodiment is obtained from the Dow Chemical Company from their METHOCEL line under the specific designation "E4M."

The present invention contemplates the simultaneous use of more than one agglomerating agent. For example, two or more different types or grades of HPMC could be blended so as to modify the properties of the agent as a whole. In addition, it may be desirable to use two or more agglomerating agents which have different solubility properties to thereby produce a stepped release of the product when used.

The present invention also contemplates the use of more than one agglomerating step whereby more than one layer of agglomerating agent can be applied to the clusters of agglomerated sweetener particles. Depending on the results desired, it may be desirable to use either the same or different agglomerating agents in each of the layers.

The relative proportion of agglomerating agent to high-potency sweetener depends on the specific high-potency sweetener and agglomerating agent selected. In addition, the amount of agglomerating agent used will depend on the properties which are sought in the agglomerated sweetener. For example, it may be desired to lower the bulk density of a sweetener such as acesulfame K or to raise the bulk density of a sweetener such as aspartame. In such applications, the amount of agglomerating agent may be several times the amount of the sweetener. Selecting the proper amount of agglomerating agent to make the desired adjustment in bulk density is considered to be within the ordinary skill in the art. In addition, because the cost per unit weight of the sweetener will typically be much higher than the cost per unit weight of the agglomerating agent, it may also be desirable in certain embodiments to use excess amounts of agglomerating agent in order to increase the volume of the agglomerated sweetener to thereby make it easier to measure the sweetener volumetrically.

On the other hand, if the object is to merely improve the flowability of the sweetener, it is preferred to use a lower amount of agglomerating agent. In fact, it was a surprising result to observe how little agglomerating agent is needed to effect improvements (See Example 4 below).

Generally, the amount of agglomerating agent should be kept below the level at which it would adversely affect the flavor or texture of the product in which it will be incorporated. The agglomerating agent must comprise between 1 and 65 weight percent of the agglomerated sweetener. In the most preferred embodiment, the HPMC is added to between about 5 and about 50 percent by weight of the agglomerated sweetener, i.e. percent by combined weight of the sweetener and the agglomerating agent. Even more preferably the agglomerating agent is added to an amount between about 10 and about 30 weight percent of the agglomerated sweetener.

As shown in Figure 1, the high-potency sweetener and agglomerating agent are preferably well blended in their dry form before any addition of solvent. In the most preferred embodiment, this is accomplished by simply adding the two powdered components to a mixer bowl of a planetary type mixer. The mixer is activated for a time sufficient to thoroughly intermix the two powders. This dry blending of the high-potency sweetener and the agglomerating agent is thought to be desirable in that the two components are thus uniformly dispersed in one another prior to the addition of the limited quantity of solvent, thereby providing for more uniform dispersion during the solvent addition and in the final product.

In alternative embodiments, the solvent may be added to the agglomerating agent before it is added to the high-potency sweetener. For example, a carbohydrate syrup can be used in the present process and thus act as both the agglomerating agent and the solvent. Other agglomerating agents can likewise be premixed with their solvent before being added to the high-potency sweetener. For example, shellac is preferably used with an ethanol solvent already present.

In other alternative embodiments, the solvent may be added to the high-potency sweetener before the agglomerating agent is added.

Referring again to the preferred embodiment illustrated in Figure 1, after the dry high-potency sweetener and dry agglomerating agent are thoroughly mixed, a solvent, i.e. a solvent for the agglomerating agent and/or the high-potency sweetener, is added to the mix. Naturally, the selection of solvent will depend on the selection of the agglomerating agent and/or the high-potency sweetener. When using HPMC in the preferred embodiment, the preferred solvent is water. When using shellac or zein as the agglomerating agent, the preferred solvent is ethanol. Certainly, it is important to avoid solvents which would be unsafe for use in making food products.

The total amount of solvent added will also depend on the selection of the agglomerating agent and/or the high-potency sweetener. As stated, the amount of solvent is intentionally limited so as to produce a damp, dust-free, non-flowable, non-extrudable, crumbly mixture. By the word "crumbly" it is meant that the damp mix easily separates from itself. By way of comparison, the damp mix should have the consistency

4

and texture of wet sand. By way of contrast, the damp mix should not have so much solvent that it becomes dough-like, paste-like, clay-like, or soup-like. It has been found that, if the mix does go to the dough-like stage, many of the advantages of the present invention are lost. In particular, a dough-like mix is more difficult to mix, handle, and dry and considerably more difficult to treat in order to achieve the desired particle sizes.

The preferred method of adding the solvent to the mix is to add it in small amounts in time spaced increments while continuously mixing. When adding the solvent this way, it is desirable to allow the mix to become homogeneous before the next addition of solvent. In following this preferred method, the solvent is allowed to be absorbed slowly into the mixture without producing pools of solvent which can result in large clay-like lumps in the mixture.

It has been found that one method of determining when there is sufficient solvent added is to monitor the power demand for the mixer. In particular, the power demand increases dramatically as the mix goes from the desired damp mix stage to a dough-like stage. This is believed to be due to the fact that, in the desired damp mix stage, the mix is crumbly, i.e. easily separable; whereas when the mix moves into the dough-like stage, the mix become more cohesive. As a result, the power demand on the mixer can be monitored and the solvent addition stopped just as the power demand begins a sharp rise.

It is also possible to determine the proper amount of solvent by visually monitoring the condition of the damp mix. The characteristics mentioned above, namely dust-free, non-flowable, and crumbly, are relatively easy to observe and contrast with the cohesiveness, and flowability of the dough-like stage.

Naturally, once the optimum amount of solvent is determined for a particular agglomerating agent and a particular weight ratio of agglomerating agent to high-potency sweetener, that optimum amount will be reproducible.

In the most preferred embodiment, wherein aspartame is agglomerated with HPMC, the water is added so as to comprise between about 20 percent to about 55 percent by weight of the damp mix, more preferably between about 30 and about 40 percent, and most preferably, 35 percent. When zein is used to agglomerate aspartame, ethanol is most preferably present in an amount of between about 25 and about 50 percent by weight of the damp mix. Likewise, when pre-solvated shellac is used to agglomerate aspartame, ethanol is more preferably present in an amount of between about 7 and about 15 percent by weight of the damp mix.

After the last of the solvent is added, the combination is continuously mixed for a time sufficient to allow for a homogeneous mass. In particular, the solvated and unsolvated high-potency sweetener, the solvated and unsolvated agglomerating agent, and any free solvent should all be evenly dispersed in the mix. The optimum time of mixing can be determined visually.

The type of mixing affected on the mix is believed to be important to the present invention. In particular, it is believed that a compressive type mixing is important in order to push the agglomerating agent and the high-potency sweetener together into clusters. This is contrasted with a high shear type mixing which would act to separate the components of the damp mix. Accordingly, the preferred type of mixer is a planetary mixer or other type mixer that would give similarly compressive type mixing.

After the final mixing, the damp mix is dried. Preferably, substantially all of the solvent will be removed from the mix. The drying is preferably accomplished by taking the damp mix out of the mixer bowl and spreading it on drying trays. It has been found to be preferable to line the drying trays with paper to facilitate removal of the dried product. In the most preferred embodiment, the damp mix is spread on trays at a depth of about 2 cm.

Preferably, the drying is accomplished by placing the trays in a drying oven at a temperature and for a time sufficient to drive off substantially all of the solvent. Other methods of drying such as fluid bed drying can also be used. Naturally, the temperature and time for drying will depend on the specific solvent and amount of solvent used as well as factors such as the thermal or moisture stability of the high-potency sweetener. Accordingly, it may be desirable to allow the damp mix to dry at ambient conditions. In the most preferred embodiment, the aspartame agglomerated with HPMC is dried at about 76,7°C (170°F) for 12 to 14 hours.

After drying in the most preferred embodiment, the agglomerated aspartame has been found to have a water content of between about 2 and 3 percent by weight of the total. The acceptable level of solvent left in the agglomerated high-potency sweetener particles may be higher or lower than this amount and will depend on the nature of the high-potency sweetener and agglomerating agent used. Naturally, if the high-potency sweetener is subject to deterioration in the presence of the solvent, or if the solvent is not compatible with whatever formulation in which the agglomerated high-potency sweetener is to be used, it is important to drive off as much of the solvent as possible.

After drying, the mix is generally characterized as being in the form of hard, dry lumps of various shapes and sizes. At this point, the dry mix is ready to be treated to produce the desired range of particle sizes. This can be accomplished in various ways. Most preferably, the dried mix is fed into a grinder which comminutes the mix into smaller particles. Other devices such as a roller mill can also be used to comminute the dried mix. The grinder or other device is preferably equipped with a screen which will pass the desired particle size range. If desired, other techniques such as a second screen or a cyclone separator can be used to ensure a minimum particle size as well as a maximum particle size. Presently, a screen with 0,13 mm (0.05 inch) holes is used to produce the agglomerated aspartame particles of the most preferred embodiment.

FIGURE 2b is a photomicrograph at 100 X of the product of the most preferred embodiment of this invention (See Example 1). In particular, this product is aspartame crystals as shown in FIGURE 2a which have been agglomerated with 15 percent by weight of the "E4M" HPMC described above. The dried mix was ground in a Fitzmill grinder having a screen with 0,13 mm (0.05 inch) holes. As can be seen, the product comprises collections or clusters of individual aspartame crystals which have been bound together by the HPMC. This photomicrograph also shows how the invention is useful to reduce the total surface area of the aspartame crystals.

The product also includes aspartame crystals which are not bonded to others. These unbonded crystals may have missed being bonded during the agglomerating process or they may have become disattached from clusters during the grinding process.

In the most preferred embodiment, only the maximum particle size is controlled. That is, the smaller particles are not held back. As a result, and as shown in FIGURE 2b, there are small unbonded crystals in addition to the clusters. This result is believed to be preferable for particular applications. For example, when the agglomerated aspartame is used in a chewing gum formulation, this particle size distribution is believed to produce the effect of allowing some of the smaller and/or unbonded particles of the aspartame to be released more quickly when the gum is chewed than the aspartame which is bound in the clusters. As a result, the release profile is such that the consumer experiences sufficient sweetness initially and subsequently. As shown in the Example 1 below, the aspartame agglomerated this way, had improved handling properties even though some of the aspartame crystals remained unbonded.

In alternative embodiments, it may be desirable to control the maximum and the minimum particle size to produce a narrower range of particle sizes. This may be desired when it is intended for all of the high-potency sweetener to have a more uniform delayed release, or when it is desired to adjust the flowability or density more closely.

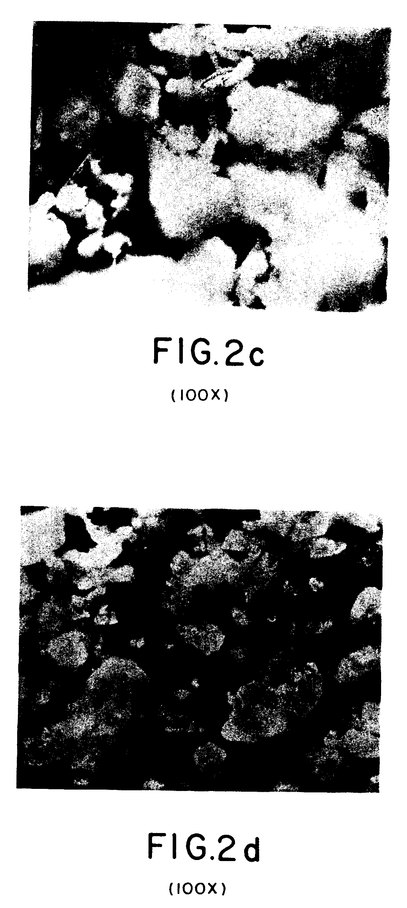

FIGURE 2c is a photomicrograph of a product similar to that of FIGURE 2b except that the product shown has HPMC present in 30 percent by weight of the agglomerated aspartame (see Example 2). As can be seen, the clusters in this product have more HPMC around their external surfaces. In addition, there are fewer unbonded aspartame crystals. As shown in the Table below, this product had a lower angle of repose, i.e. better flowability, and a higher bulk density than the 15 percent product of Example 1.

FIGURE 2d is a photomicrograph at 100 X of a product which was made with according to the most preferred process described above except that zein was used as the agglomerating agent instead of HPMC (See example 5). The zein was used at a level of about 60 percent by weight of the aspartame. The solvent for the zein was ethanol which was present in about 27 percent by weight of the damp mix. As can be seen in the photomicrograph, using zein at this level results in a product which is more crystalline.

EXAMPLES

The following examples are provided by way of explanation and illustration. Examples 1 through 14 were produced with aspartame as the high-potency sweetener. Examples 15 through 18 were produced with acesulfame K as the high-potency sweetener.

Example 1 was carried out according to the most preferred embodiment of the present invention. In particular, 7711 g. of unmilled aspartame from the G.D. Searle Company was placed in the 40 qt. bowl of a Hobart mixer. 1361 g. of Methocel E4M from the Dow Chemical Co. was also added to the bowl. These two powders were dry blended at the low speed setting on the mixer for approximately 15 minutes. A total of approximately 4800 ml of water was added to this mix. This was accomplished by adding between 200 to 1000 ml of water every 3 to 5 minutes with the mixer running. The damp mix that resulted was dustless and coalesced when squeezed. The damp mix was mixed for about 5 minutes after the last water addition to insure complete interdispersion. The damp mix was transferred to stainless steel trays and spread to a depth of approximately 2 cm. At this point, the material was approximately 34.6 weight percent water, 9.8 weight percent HPMC and 55.6 weight percent aspartame. The trays were placed in an oven and heated to 76,7°C (170°F) for 12 to 14 hours. After drying the mix was ground in a Fitzmill at medium speed and using a 0,13 mm (0.05 inch) screen. The water content of the final product was between 2 and 3 weight percent. The HPMC was present at about 15 weight percent of the agglomerated aspartame. The product of this example is shown in FIGURE 2b.

Example 2 was carried out the same as Example 1 except that the batch size was much reduced. In particular, in Examples 2-18, the combined weight of the sweetener and the agglomerating agent was 50 g. In Example 2, the proportion of HPMC to aspartame was double that used in Example 1, i.e. 15 g. of E4M were used with 35 g. of aspartame. Also, water was present in the damp mix at about 42 percent by weight.

Example 3 was carried out the same as Example 2 except that a solution comprising 70 weight percent Sorbitol and 30 weight percent water, was used in the place of water. In addition, only 7.5 g. of E4M was used with 42.5 g. of aspartame to produce agglomerated aspartame comprising 15 weight percent HPMC.

Example 4 was carried out the same as Example 2 except that 3.5 g. of HPMC was added to 50 ml of water to make a predissolved HPMC. 3.5 g. of this predissolved HPMC was then added to 46.5 g. of aspartame. Thus, the HPMC was present as about 0.5 percent by weight of the agglomerated aspartame. The total water content of the damp mix was approximately 6.5 percent.

Example 5 was carried out the same as Example 2 except that zein was used as the agglomerating agent. The zein was acquired from Freeman Industries Inc. as their regular grade. The solvent used was ethanol at about 27 weight percent of the damp mix. The zein was present as 60 weight percent of the agglomerated aspartame. The product of this example is shown in FIGURE 2d.

Example 6 was carried out the same as Example 5 except that the zein was present as 40 weight percent of the agglomerated aspartame. The ethanol solvent was present as 37 weight percent of the damp mix.

Example 7 was carried out the same as example 5 except that a different grade of zein was used. In particular, the zein was obtained in a finer particle size. In addition water was used as the solvent at 38 weight percent of the damp mix. The zein was present as 60 weight percent of the agglomerated aspartame.

Example 8 was carried out the same as Example 7 except that ethanol was used as the solvent at 40 weight percent of the damp mix.

Example 9 was carried out the same as Example 2 except that shellac in an ethanol solution was used as the agglomerating agent. The shellac was obtained from Bradshaw and Prager as their Food Grade 6# cut confectioner's dewaxed lac glaze. The ethanol was present at about 25 weight percent of the damp mix. The shellac was present as 15 weight percent of the dried, agglomerated aspartame particles.

Example 10 was carried out the same as Example 2 except that gum arabic was used as the agglomerating agent. The gum arabic was obtained in spray dried form from Meer Corporation. The solvent was water present at 32 weight percent of the damp mix. The gum arabic was present at 15 weight percent of the agglomerated aspartame.

Example 11 was carried out the same as Example 10 except that ethanol was used as the solvent for the gum arabic. The ethanol was present at about 45 weight percent of the damp mix.

Example 12 was carried out the same as Example 2 except that a maltodextrin was used as the agglomerating agent. The maltodextrin was obtained from Grain Processing Corp. under the designation "Maltrin 150." It had a dextrose equivalency of 13-17. The water solvent was present at about 31 weight percent of the damp mix.

Example 13 was carried out the same as Example 2 except that a starch was used as the agglomerating agent. The starch was obtained from the A.E. Staley Company under the designation "Binasol 15." The water solvent was present at about 41 weight percent of the damp mix.

Example 14 was carried out the same as Example 2 except that a gelatin was used as the agglomerating agent. The gelatin was obtained from Grayslake Gelatin Co. as a 250 Bloom type A gelatin powder. The water solvent was present at about 52 weight percent of the damp mix.

Example 15 was carried out the same as Example 5 except that the high-potency artificial sweetener known as acesulfame K was used as the high-potency sweetener. The acesulfame K was obtained from Hoechst. Zein was the agglomerating agent as was added to 60 weight percent of the acesulfame K. The ethanol solvent was present at 21 weight percent of the damp mix.

Example 16 was carried out the same as Example 15 except that a modified cellulose was used as the agglomerating agent. Specifically, the modified cellulose was ethyl cellulose obtained from the Dow Chemical Co. under the designation "Ethocel". Water was used as the solvent at 12 weight percent of the damp mix.

Example 17 was carried out the same as Example 15 except that shellac in an ethanol solution was used as the agglomerating agent. The shellac was present at about 5 weight percent of the agglomerated acesulfame K particles. The ethanol solvent was present at 4 weight percent of the damp mix.

Example 18 was carried out the same as Example 17 except that after the agglomerated particles were dried and ground, they were treated by the same process to put a second coat of shellac on the particles. In the second pass, the ethanol was present at 7 weight percent of the damp mix. The resultant particles comprised shellac in an amount of about 12 to 14 weight percent of the twice coated acesulfame K.

Each of the agglomerated sweeteners made in the examples described above was tested to determine its handling ability. Each agglomerated sweetener was tested to determine its angle of repose and its tapped bulk density.

The angle of repose was measured by pouring a quantity of the powder through a 6 cm funnel which had an outlet 1.27 cm about the inlet of a 7 cm funnel which in turn had its outlet 2.54 cm above a flat level plate. The height and radius of the mound formed on the plate were measured. The angle was obtained by taking the arctangent of the height divided by the radius.

The tapped bulk density was measured by placing 25 ml of the powder in a graduated cylinder and then tapping the cylinder on the table 40 times to allow for settling. More powder was added to the cylinder which was then tapped another 25 times. Any powder in excess of 25 ml was removed and the cylinder was weighed. The weight was multiplied by 4 to obtain the tapped bulk density as the weight in grams for 100 ml of the powder.

The following table summarizes the results for each of the examples listed above. In addition, the values for the untreated powders are also included.

## TABLE

| No. | Ingredient | Agent | Solvent | Amount | Angle | Density[*] |
|---|---|---|---|---|---|---|
| | aspartame | None | | | 46.8 | 32.6 |
| 1 | " " | HPMC | $H_2O$ | 15% | 39.4 | 56.6 |
| 2 | " " | HPMC | $H_2O$ | 30% | 36.7 | 47.8 |
| 3 | " " | HPMC | Sol 70 | 15% | 40.1 | 66.9 |
| 4 | " " | HPMC | $H_2O$ | 1% | 40.1 | 48.5 |
| 5 | " " | zein | EtOH | 60% | 31.1 | 66.0 |
| 6 | " " | zein[**] | EtOH | 40% | 31.6 | 60.2 |
| 7 | " " | zein[**] | $H_2O$ | 60% | 30.6 | 48.7 |
| 8 | " " | zein | EtOH | 60% | 34.8 | 55.5 |
| 9 | " " | shellac | EtOH | 15% | 27.8 | 65.7 |
| 10 | " " | gum arabic | $H_2O$ | 15% | 45.0 | 46.8 |
| 11 | " " | gum arabic | EtOH | 15% | 38.7 | 51.5 |
| 12 | " " | maltrin | $H_2O$ | 15% | 45.0 | 58.8 |
| 13 | " " | Binasol | $H_2O$ | 15% | 44.1 | 46.4 |
| 14 | " " | gelatin | $H_2O$ | 15% | 36.7 | 57.3 |
| | acesulfame K | None | | | 30.2 | 126.8 |
| 15 | " " | zein | EtOH | 60% | 33.1 | 65.3 |
| 16 | " " | ethocel | EtOH | 15% | 34.8 | 79.0 |
| 17 | " " | shellac | EtOH | 5%[***] | 34.2 | 103.5 |
| 18 | " " | shellac | EtOH | 12% | 32.6 | 92.1 |

[*] tapped bulk density in g./100 ml
[**] fine grade zein powder
[***] two coats applied in two granulating processes

In summary, a relatively simple and inexpensive process has been described for producing controlled release ingredients for chewing gum.

## Claims

1. A method for agglomerating a high-potency sweetener to improve its handling properties comprising the following steps:

mixing a quantity of a high-potency sweetener with an amount between 1 percent and 65 percent by weight of the agglomerated high-potency sweetener of an agglomerating agent and a limited quantity of solvent to produce a damp mix, the damp mix being characterized as being dust free, non-flowing, and crumbly;

drying said damp mix; and

particle sizing said dried mix to thereby obtain agglomerated particles of the high-potency sweetener within a predetermined particle size range.

2. A method for agglomerating a high-potency sweetener comprising the following steps:

dry blending a quantity of the high-potency sweetener with an amount between 1 percent and 65 percent by weight of the agglomerated high-potency sweetener of a powdered agglomerating agent;

gradually adding a limited quantity of solvent to the mixture of high-potency sweetener and agglomerating agent in an amount sufficient to create a damp mix, the damp mix being characterized as being dust free, non-flowing, and crumbly;

drying said damp mix; and

comminuting said dried mix to thereby create agglomerated particles of the high-potency sweetener.

3. A method for treating aspartame to improve its handling properties comprising the steps of:

dry blending a quantity of powdered aspartame with an amount between 1 percent and 65 percent by weight of the agglomerated high-potency sweetener of a powdered agglomerating agent;

adding a limited amount of solvent to the mixture of aspartame and agglomerating agent in an amount sufficient to produce a damp mix, the damp mix being characterized by a solvent content between about 20 and about 55 percent by weight of the damp mix;

drying said damp mix to remove substantially all of said solvent; and

comminuting said dried mix to thereby produce agglomerated particles of aspartame.

4. The method of claim 1 or 2 wherein said high-potency sweetener is selected from the group consisting of aspartame, salts of acesulfame, alitame, saccharin and its salts, and cyclamic acid and its salts, thaumatin, and monellin.

5. The method of claim 4 wherein said agglomerating agent is selected from the group consisting of modified cellulose, gums, shellac, zein, maltodextrins, gelatins, starches, and lactose as well as combinations thereof.

6. The method of one of claims 1 to 5 wherein said agglomerating agent is hydroxypropyl methylcellulose.

7. The method of claim 6 wherein said hydroxypropyl methylcellulose is added in an amount between about 5 percent and about 50 percent by weight of the agglomerated high-potency sweetener.

8. The method of one of claims 1 to 7 wherein the solvent is added in an amount between about 20 and about 55 percent by weight of the damp mix.

9. The method of claim 1 wherein said agglomerating agent and said solvent are combined in a carbohydrate syrup.

10. The method of one of claims 6 to 9 wherein said hydroxypropyl methylcellulose is added in an amount between about 5 percent and about 50 percent by weight of the agglomerated aspartame.

11. The method of claim 10 wherein the solvent is added in an amount between about 30 and about 40 percent by weight of the damp mix.

12. The method of one of claims 1 to 11 wherein the mixture is obtained by using a compressive type mixing for pushing the agglomerating agent and the sweetener together into clusters.

13. The method of claim 12 wherein a planetary mixer is used.

9

EP 0 320 523 B1

**14.** The method of one of claims 1 to 13 wherein the agglomerated particles are produced by grinding using a screen so that a particle size distribution with an upper limit is obtained.

**15.** An agglomerated high-potency sweetener made according to the method of one of claims 1 to 14.

**Patentansprüche**

**1.** Verfahren zum Agglomerieren eines hochwirksamen Süßstoffes zum Verbessern seiner Handhabungseigenschaften mit den folgenden Schritten:

Mischen einer Menge eines hochwirksamen Süßstoffes mit einem Betrag zwischen 1 Gewichtsprozent und 65 Gewichtsprozent des agglomerierten hochwirksamen Süßstoffes mit einem Agglomerierungsmittel und einer begrenzten Menge von Lösungsmittel zum Erzeugen einer feuchten Mischung, wobei die feuchte Mischung als staubfrei, nichtfließend und krümelig gekennzeichnet ist;

Trocknen der feuchten Mischung und

Klassieren der Teilchen der getrockneten Mischung zum dadurch Erhalten agglomerierter Teilchen des hochwirksamen Süßstoffes mit einem vorbestimmten Teilchengrößenbereich.

**2.** Verfahren zum Agglomerieren eines hochwirksamen Süßstoffes mit den folgenden Schritten:

trockenes Mischen einer Menge eines hochwirksamen Süßstoffes mit einem Betrag zwischen 1 Gewichtsprozent und 65 Gewichtsprozent des agglomerierten hochwirksamen Süßstoffes mit einem pulverisierten Agglomerierungsmittel;

allmähliches Zufügen einer begrenzten Menge eines Lösungsmittels zu der Mischung des hochwirksamen Süßstoffes und des Agglomerierungsmittels in einem Betrag ausreichend zum Erzeugen einer feuchten Mischung, wobei die Mischung als staubfrei, nichtfließend und krümelig gekennzeichnet ist;

Trocknen der feuchten Mischung und

Zerkleinern der getrockneten Mischung zum dadurch Erzeugen agglomerierter Teilchen des hochwirksamen Süßstoffes.

**3.** Verfahren zum Behandeln von Aspartam zum Verbessern seiner Handhabungseigenschaften mit den Schritten:

trockenes Mischen einer Menge von pulverisiertem Aspartam mit einem Betrag zwischen 1 Gewichtsprozent und 65 Gewichtsprozent des agglomerierten hochwirksamen Süßstoffes mit einem pulverisierten Agglomerierungsmittel;

Hinzufügen eines begrenzten Betrages von Lösungsmittel zu der Mischung aus Aspartam und Agglomerierungsmittel mit einem Betrag ausreichend zum Erzeugen einer feuchten Mischung, wobei die Mischung durch einen Lösungsmittelgehalt zwischen ungefähr 20 und ungefähr 55 Gewichtsprozent der feuchten Mischung gekennzeichnet ist;

Trocknen der feuchten Mischung zum Entfernen im wesentlichen des gesamten Lösungsmittels und

Zerkleinern der getrockneten Mischung zum dadurch Erzeugen agglomerierter Teilchen aus Aspartam.

**4.** Verfahren nach Anspruch 1 ode 2, bei dem der hochwirksame Süßstoff aus der Gruppe gewählt ist, die Aspartam, Salze des Acesulfams, Alitam, Saccharin und seine Salze und Cyclaminsäure und ihre Salze, Thaumatin und Monellin enthält.

**5.** Verfahren nach Anspruch 4, bei dem das Agglomerierungsmittel aus der Gruppe gewählt ist, die aus modifizierter Cellulose, Gummi, Schallack, Zein, Maltodextrine, Gelantinen, Stärken und Lactose sowie eine Kombination daraus besteht.

**6.** Verfahren nach einem der Ansprüche 1 bis 5, bei dem das Agglomerierungsmittel Hydroxypropylmethylcellulose ist.

**7.** Verfahren nach Anspruch 6, bei dem die Hydroxypropylmethylcellulose in einem Betrag zwischen ungefähr 5 Gewichtsprozent und ungefähr 50 Gewichtsprozent des agglomerierten hochwirksamen Süßstoffes zugefügt wird.

**8.** Verfahren nach einem der Ansprüche 1 bis 7, bei dem das Lösungsmittel in einem Betrag zwischen ungefähr 20 und ungefähr 55 Gewichtsprozent der feuchten Mischung hinzugefügt wird.

10

**9.** Verfahren nach Anspruch 1, bei dem das Agglomerierungsmittel und das Lösungsmittel in einem Kohlenwasserstoffsirup kombiniert sind.

**10.** Verfahren nach einem der Ansprüche 6 bis 9, bei dem die Hydroxypropylmethylcellulosein einem Betrag zwischen ungefähr 5 Gewichtsprozent und ungefähr 50 Gewichtsprozent zu dem agglomerierten Aspartam hinzugefügt wird.

**11.** Verfahren nach Anspruch 10, bei dem das Lösungsmittel in einem Betrag zwischen ungefähr 30 und ungefähr 40 Gewichtsprozent der feuchten Mischung hinzugefügt wird.

**12.** Verfahren nach einem der Ansprüche 1 bis 11, bei dem die Mischung erhalten wird unter Benutzung des Mischens vom Kompressionstyp zum Schieben des Agglomerierungsmittels und des Süßstoffes zusammen in Cluster.

**13.** Verfahren nach Anspruch 12, bei dem ein Planetenmischer benutzt wird.

**14.** Verfahren nach einem der Ansprüche 1 bis 13, bei dem die agglomerierten Teilchen erzeugt werden durch Mahlen unter Benutzung eines Siebes, so daß eine Teilchengrößenverteilung mit einer oberen Grenze erhalten wird.

**15.** Ein agglomerierter hochwirksamer Süßstoff, der mit dem Verfahren nach einem der Ansprüche 1 bis 14 hergestellt ist.

**Revendications**

**1.** Procédé pour l'agglomèration d'un édulcorant à puissance élevée pour améliorer ses propriétés de manipulation, comprenant les étapes suivantes :
- mélange d'une quantité d'un édulcorant à puissance élevée avec une quantité comprise entre 1 pour cent et 65 pour cent en poids de l'édulcorant à puissance élevée aggloméré d'un agent agglomérant, et une quantité limitée de solvant, pour produire un mélange humide, le mélange humide étant caractérisé somme étant exempt de poussière, non-coulant, et friable ;
- séchage dudit mélange humide ; et
- calibrage dudit mélange séché, pour obtenir ainsi des particules agglomérées de l'édulcorant à puissance élevée à l'intérieur d'une plage de dimensions de particule prédéterminée.

**2.** Procédé pour l'agglomération d'un édulcorant à puissance élevée, comprenant les étapes suivantes ;
- mélange à sec d'une quantité de l'édulcorant à puissance élevée avec une quantité comprise entre 1 pour cent et 65 pour cent en poids de l'édulcorant A puissance élevée aggloméré d'un agent agglomérant pulvérulent ;
- addition progressive d'une quantité limitée de solvant au mélange de l'édulcorant à puissance élevée et de l'agent agglomérant, dans une quantité suffisante pour créer un mélange humide, le mélange humide étant caractérisé comme étant exempt de poussière, non-coulant, et friable ;
- séchage dudit mélange humide ; et
- pulvérisation dudit mélange séché pour créer ainsi des particules agglomérées de l'édulcorant à puissance élevée.

**3.** Procédé pour le traitement de l'aspartame pour améliorer ses propriétés de manipulation, comprenant les étapes consistant à :
- mélanger à sec une quantité d'aspartame pulvérulent avec une quantité comprise entre 1 pour cent et 65 pour cent en poids de l'édulcorant à puissance élevée aggloméré d'un agent agglomérant pulvérulent ;
- ajouter une quantité limitée de solvant au mélange d'aspartame et d'agent agglomérant, dans une quantité suffisante pour produire un mélange humide, le mélange humide étant caractérisé par une teneur en solvant comprise entre environ 20 et environ 55 pour cent en poids du mélange humide ;
- sécher ledit mélange humide pour éliminer sensiblement la totalité dudit solvant ; et
- pulvériser ledit mélange séché pour produire ainsi des particules agglomérées d'aspartame.

**4.** Procédé selon l'une des revendications 1 et 2, dans lequel ledit édulcorant a puissance élevée est choisi dans le groupe constitué par l'aspartame, les sels d'acésulfame, l'alitame, la saccharine et ses sels, et l'acide cyclamique et ses sels, la thaumatine, et la monelline.

**5.** Procédé selon la revendication 4, dans lequel ledit agent agglomérant est choisi dans le groupe constitué par la cellulose modifiée, les gommes, la gomme-laque, la zéine, les maltodextrines, les gélatines, les amidons et le lactose, ainsi que leurs combinaisons.

**6.** Procédé selon l'une quelconque des revendications 1 à 5, dans lequel ledit agent agglomérant est l'hydroxypropyl méthylcellulose.

**7.** Procédé selon la revendication 6, dans lequel ladite hydroxypropyl méthylcellulose est ajoutée dans une quantité comprise entre environ 5 pour cent et environ 50 pour cent en poids de l'édulcorant à puissance élevée aggloméré.

**8.** Procédé selon l'une quelconque des revendications 1 à 7, dans lequel le solvant est ajouté dans une quantité comprise entre environ 20 et environ 55 pour cent en poids du mélange humide.

**9.** Procédé selon la revendication 1, dans lequel ledit agent agglomérant et ledit solvant sont combinés en un sirop de glucide.

**10.** Procédé selon l'une quelconque des revendications 6 à 9, dans lequel ladite hydroxypropyl méthylcellulose est ajoutée dans une quantité comprise entre environ 5 pour cent et environ 50 pour cent en poids de l'aspartame aggloméré.

**11.** Procédé selon la revendication 10, dans lequel le solvant est ajouté dans une quantité comprise entre environ 30 et environ 40 pour cent en poids du mélange humide.

**12.** Procédé selon l'une quelconque des revendications 1 à 11, dans lequel le mélange est obtenu à l'aide d'un mélangeage de type à compression pour exercer une pression sur l'agent agglomérant et l'édulcorant pour les transformer ensemble en amas.

**13.** Procédé selon la revendication 12, dans lequel un mélangeur planétaire est utilisé.

**14.** Procédé selon l'une quelconque des revendications 1 à 13, dans lequel les particules agglomérées sont obtenues par broyage en utilisant un tamis de telle sorte qu'une répartition granulométrique avec une limite supérieure soit obtenue.

**15.** Edulcorant à puissance élevée aggloméré obtenu conformément au procédé tel que définie à l'une quelconque des revendications 1 à 14. >

# F I G. I

```
┌─────────────────┐         ┌─────────────────┐
│    Powdered     │         │    Powdered     │
│  High-Potency   │         │  Agglomerating  │
│    Sweetener    │         │      Agent      │
└─────────────────┘         └─────────────────┘
```

Thoroughly Mix the Powders

Gradually Add a Limited
Quantity of Solvent
While Continuing Mixing

Spread the Damp Mix
on a Drying Tray

Dry the Mix to Remove
Substantially All of
the Solvent

Grind the Dry Mix to
Obtain Agglomerated Particles
of the High-Potency Sweetener
with the Desired Particle Size

FIG.2a

(100X)

FIG.2b

(100X)

FIG.2c

(100X)

FIG.2 d

(100X)